# EUROPEAN PATENT APPLICATION

(11) **EP 0 607 727 A1**
(43) Date of publication of application: **27.07.1994**
(21) Application number: 93480179.6
(22) Date of filing: 04.11.1993
(51) Int. Cl.: G09B 21/00, G06F 3/16, G06F 3/023

(54) **Method and system for nonvisual status determination of multistate graphic objects in a data processing system**

(30) Priority: 22.12.1992 US 994812
(71) Applicant: International Business Machines Corporation, Armonk, N.Y. 10504 (US)
(72) Inventor: Cragun, Brian J., Rochester, MN 559901 (US)
(74) Representative: de Pena, Alain

(57) **Abstract**

A method and system are disclosed which permit nonvisual status determination of multistate graphic objects within a data processing system, such as scroll bars, slider controls, push buttons, and windows. A particular audible cue is associated with each selected multistate graphic object. Each audible cue includes at least one audible characteristic, such as frequency, timbre, amplitude and periodicity. The audible cue associated with a particular multistate graphic object is then generated within the data processing system, permitting the presence of the multistate graphic object to be audibly determined. The status of the multistate graphic object is thereafter periodically determined and an audible characteristic of the audible cue is varied in response to variations in the status, permitting the status of any individual multistate graphic object to be nonvisually determined.

## Description

### BACKGROUND OF THE INVENTION

### 1. Technical Field:

The present invention relates in general to an improved graphical user interface within a data processing system and in particular to an improved graphical user interface which permits rapid and efficient determination of graphic object status within a data processing system. Still more particularly, the present invention relates to an improved graphical user interface which permits nonvisual status determination of a multistate graphic object within a data processing system.

### 2. Description of the Related Art:

In recent years, there has been a move among computer application software developers toward graphical user interfaces. In a graphical user interface, objects are presented for users to manipulate in ways which are similar to the manner in which such objects are manipulated in the work place. Objects, such as file cabinets, folders, documents, and printers, are displayed on the computer screen as miniature graphic representations, or icons. Users then manipulate these objects with a mouse or other graphical pointing device to perform desired operations.

For example, in order to file a document in a folder which is located within a file cabinet in the work place, a user will open the file cabinet, locate and open the correct folder, and then place the document inside. In the electronic work place of the graphical user interface, the user performs a similar process. Thus, a user will open the file cabinet icon, locate the correct folder icon, and then drop the document icon in the located folder. Because this is an electronic environment, users do not have to open the folder to put the document into it. However, users are thus able to utilize their knowledge of a real work place in order to perform this operation.

Normally sighted individuals find graphical user interfaces intuitive and easy to work with. However, except for an occasional "beep" or similar tone, graphical user interfaces are virtually silent and the vast majority of the information which such interfaces provide to the user is visual. Thus, graphical user interfaces are essentially not usable by blind or severely visually impaired people.

Blind and visually impaired computer users currently benefit from many forms of adaptive technology, including speech synthesis, large-print processing, braille desk top publishing, and voice recognition. However, presently almost none of the foregoing tools have been adapted for use with a graphical user interface. It has been suggested that programmers could write software with built-in voice labels for icons. Lazzaro, Windows of Vulnerability, Byte Magazine, June 1991, page 416.

Various synthetic or recorded speech solutions for making computer display contents available to blind persons have also been suggested, for example in Golding et al., IBM Technical Disclosure Bulletin, Vol. 26, No. 10B, pages 5633-5636 (March 1984); and, Barnett et al., IBM Technical Disclosure Bulletin, Vol. 26, No. 10A, pages 4950-4951 (March 1984).

Additionally, there have been suggested systems which include a mouse with a braille transducer so that a blind mouse user may read text and obtain certain tactile position feedback from such a mouse Comerford, IBM Technical Disclosure Bulletin No. 3, Vol. 28, page 1343 (August 1985); and Affinito, et al., IBM Technical Disclosure Bulletin No. 12, Vol. 31, page 386 (May 1989). However, while announcing various text items, either audibly or by means of a braille transducer in the mouse, such systems may provide some information to a blind user, they do not enable the user to navigate about and locate objects on the computer display screen.

There have been suggested an audible cursor positioning and pixel (picture element) status identification mechanism which may be utilized to help a user of an interactive computer graphics system locate data by utilizing aural feedback to enhance visual feedback. As the cursor in such a system is stepped across the screen, an audible click is generated which varies in tone corresponding in tone to the current status of each pixel encountered. With this combination in audible and visual cursor feedback, it becomes a simple task to identify the desired line by noting the change in tone as the cursor moves. For color display applications, each color is represented by a distinct tone so that any single pixel may be distinguished from surrounding pixels of a different color. It has been suggested that this system is especially helpful for visually impaired or learning disabled users. Drumm et al., IBM Technical Disclosure Bulletin No. 48, Vol. 27, page 25-28 (September 1984). However, the foregoing disclosure does not suggest a means of enabling a blind user to navigate about or locate objects on a computer display screen.

Recently, in United States Patent Application Serial No. 07/746,838, filed August 19, 1991, a system has been disclosed which permits a blind orvis- ually impaired user to interact with a so-called "message box" within a graphical user interface. As those skilled in the art will appreciate, each message box consists of an icon, explanatory text, and one or more "push buttons." The icon allows the user to identify visually the type of message. The text typically explains the situation and may provide assistance. The textual content may be a question or a statement. Push buttons provided within a message box typically allow the user to interact with the message box.

The proposed system permits blind or visually impaired users to accommodate a message box by announcing the textual contents of such a box when the message box first appears. Thereafter, the push buttons available to respond to the message box are also announced in order from left to right. A homing signal is then provided for finding the message box which increases in pitch as the mouse pointer approaches the message box. When the pointer enters the message box, the message box text and available push buttons are reannounced and the pointer is automatically moved to a default push button. By utilizing this system, a blind or visually impaired user may locate a message box within a computer display system; however, this system fails to provide any suggestion of a manner in which a blind or visually impaired user may selectively locate multiple displayed elements within a graphical user interface.

Another method and system have also been recently disclosed in United States Patent Application Serial No. 07/746,480, filed August 19, 1991, which permits a blind or visually impaired user to locate a mouse pointer or other graphical pointing device within the client area of a window within a graphical user interface by providing a stereo sound system and varying the intensity of the left and right audio channels to indicate a position of the mouse pointer. This system also proposes an increase in pitch of an associated sound to indicate the position of the pointer in the top or bottom of the client area of a window. While this system permits a blind or visually impaired user to manipulate a mouse pointer within a graphical user interface, it fails to show or suggest any technique whereby a particular one of a group of displayed graphical elements may be selected by such a user.

U.S. Patent Application Serial No. 802,956, filed December 5, 1991, discloses a method and system which enables a blind or visually impaired user to select a displayed graphic element within a computer system by associating an audible signal with each element within the display and thereafter generating a composite audio signal which includes elements of each audible signal associated with the displayed graphic element within a predetermined radius of the cursor.

Whi le each of the aforementioned systems greatly enhances the ability of a blind or visually occupied user to interface with a data processing system, none of these systems permit a user to determine the status of a multistate graphic object within a data processing system in a nonvisual manner. Those skilled in the art will appreciate that certain graphic objects within a data processing system are capable of being displayed in multiple states. For example, scroll bars, slider controls, push buttons, dial indicators, windows and the like may have multiple positions or states which may be displayed within a data processing system. For example, the scroll box within a scroll bar may be physically located at any point along the scroll bar. Similarly, a slider control may be manipulated along the entire length of the slider to vary a particular element within a computer display system. Additionally, push buttons, radio buttons or spin buttons may also be varied in their physical state to reflect selection, or other aspects of the control. It should therefore be apparent that a need exists for a method and system which permits the status of a multistate graphic object which is displayed within a data processing system to be determined in a nonvisual manner.

### SUMMARY OF THE INVENTION

It is therefore one object of the present invention to provide an improved graphical user interface within a data processing system.

It is another object of the present invention to provide an improved graphical user interface within a data processing system which permits the rapid and efficient determination of graphic object status.

It is yet another object of the present invention to provide an improved graphical user interface which permits nonvisual status determination of multistate graphic objects within a data processing system.

The foregoing objects are achieved as is now described. The method and system of the present invention permit nonvisual status determination of multi- state graphic objects within a data processing system, such as scroll bars, slider controls, push buttons, and windows. A particular audible cue is associated with each selected multistate graphic object. Each audible cue includes at least one audible characteristic, such as frequency, timbre, amplitude and periodicity. The audible cue associated with a particular multistate graphic object is then generated within the data processing system, permitting the presence of the multistate graphic object to be audibly determined. The status of the multistate graphic object is thereafter periodically determined and an audible characteristic of the audible cue is varied in response to variations in the status, permitting the status of any individual multistate graphic object to be nonvisually determined.

The above as well as additional objects, features, and advantages of the present invention will become apparent in the following detailed written description.

### BRIEF DESCRIPTION OF THE DRAWINGS

The novel features believed characteristic of the invention are set forth in the appended claims. The invent ion itself however, as well as a preferred mode of use, further objects and advantages thereof, will best be understood by reference to the following detailed description of an illustrative embodiment when read in conjunction with the accompanying drawings, wherein:
Figure 1 depicts a pictorial representation of a data processing system which may be utilized to implement the method and system of the present invention;
Figure 2 depicts a pictorial representation of a computer display which includes a multistate graphic object, the status of which may be nonvisually determined in accordance with the method and system of the present invention;
Figure 3 depicts an alternate multistate graphic object, the status of which may be nonvisually determined in accordance with the method and system of the present invention;
Figure 4 depicts a pictorial representation of a computer display which includes yet another multistate graphic object, the status of which may be nonvisually determined in accordance with the method and system of the present invention;
Figure 5 depicts yet another multistate graphic object, the status of which may be nonvisually determined in accordance with the method and system of the present invention; and
Figure 6 illustrates a high level logic flowchart which depicts a process for implementing the method and system of the present invention.

### DETAILED DESCRIPTION OF PREFERRED EMBODIMENT

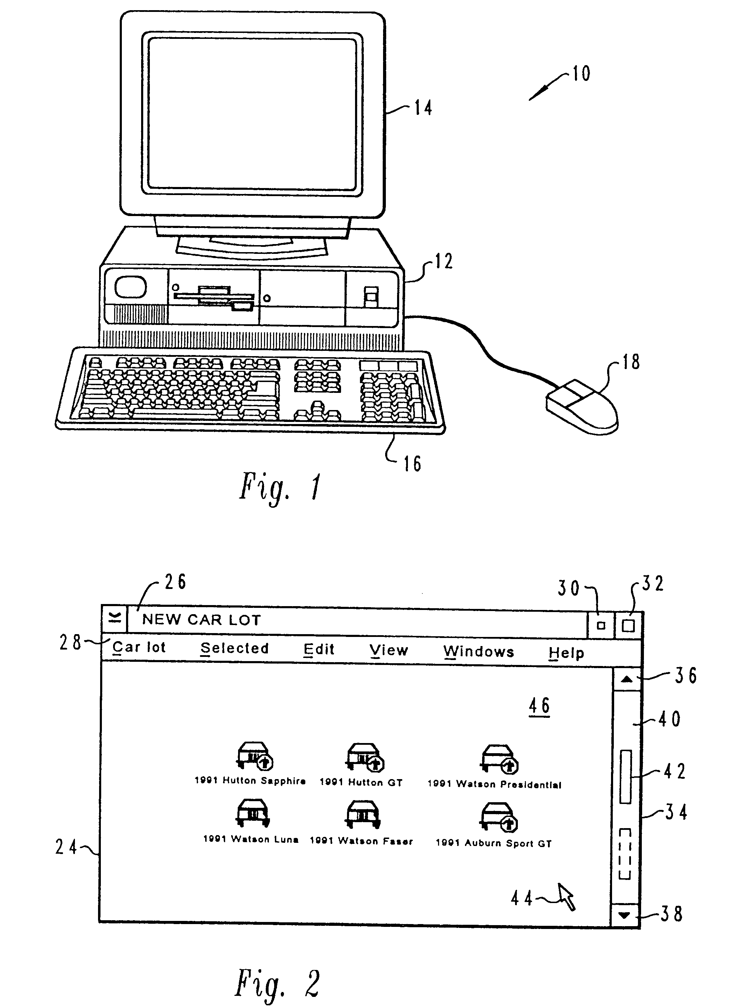

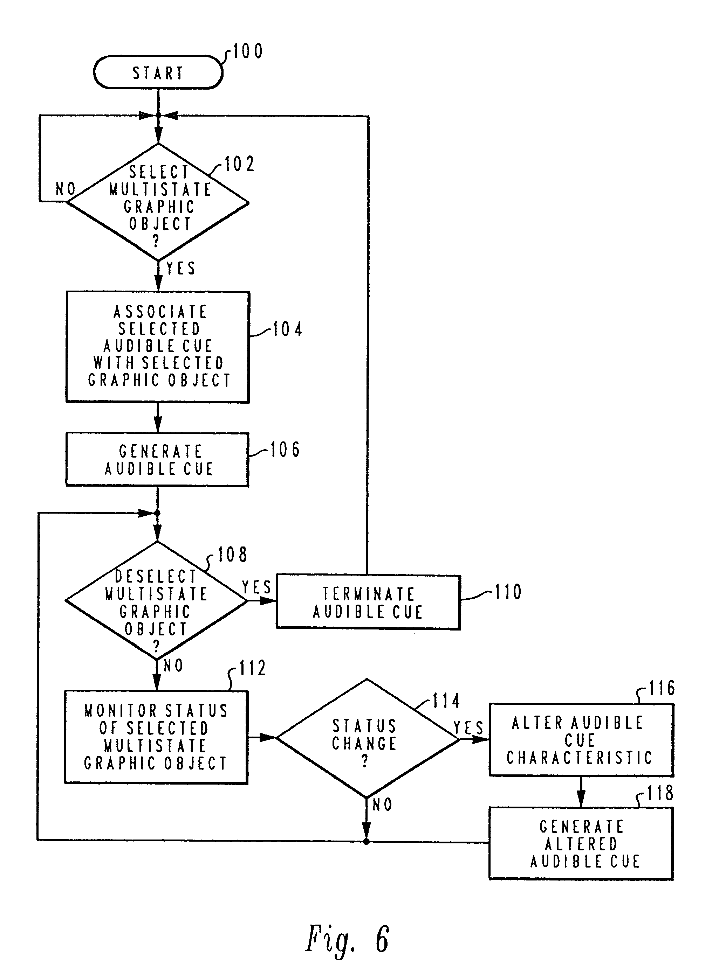

With reference now to the figures and in particular with reference to Figure 1, there is depicted a pictorial representation of a data processing system 10 which may be utilized to implement the method and system of the present invention. As illustrated, data processing system 10 includes a processor 12 coupled to a display device 14 and a keyboard 16, in a manner well known to those having ordinary skill in the art. Additionally, a graphical pointing device, such as mouse 18 is also preferably provided in association with data processing system 10. Finally, as the depicted embodiment of the present invention utilizes an audible indication of the status of a multistate graphic object, data processing system 10 also preferably includes a sound generation device, such as the International Business Machines Corporation Audio Capture and Playback Adapter (not shown). Additionally, processor 12 within data processing system 10 is preferably programmed to implement the process set forth within Figure 6.

Upon reference to the foregoing those skilled in the art will appreciate that data processing system 10 may be implemented utilizing any so-called "personal" computer, such as the International Business Machines Corporation PS/2 personal computer. Additionally, data processing system 10 may be implemented utilizing an intelligent workstation or terminal coupled to a host computer or a mid-level computer.

Referring now to Figure 2, there is depicted a pictorial representation of a computer display window 24 which includes a multistate graphic object, the status of which may be nonvisually determined in accordance with the method and system of the present invention. As is typical in such computer display windows, display window 24 includes a title bar 26 which identifies the particular window display within a mul- tiwindow display system. Similarly, a menu bar 28 is also provided and utilized to list various command options which may be graphically selected by the user. Those skilled in this art will appreciate that the selection of a particular command within menu bar 28 utilizing a keyboard input of one of the letters depicted within menu bar 28 or graphically by means of mouse pointer 44 will typically result in the display of a so-called "pull down" submenu from which multiple commands may be selected.

Also depicted within Figure 2 are control icons 30 and 32 which, as those skilled in the art will appreciate, may be utilized to increase or decrease the size of display window 24 in a manner well known in the art. A multistate graphic object is also depicted within Figure 2, namely, scroll bar 34. Those skilled in the art will appreciate that a "scroll bar" is a graphic user interface which is typically associated with a display area, such as display area 46, and which is utilized to indicate the presence of additional data or images which extend beyond the area of display area 46. By manipulating scroll bar 34 in a manner well known in the art, additional data or textual material within display area 46 may be displayed.

As those skilled in the art will appreciate, scroll bar 34 typically displays multiple states. For example, scroll box 42 may be manipulated in a vertical direction within scroll area 40 utilizing one of several techniques. For example, scroll arrow 36 or scroll arrow 38 may be graphically selected, utilizing mouse pointer 44, and may be utilized to vary the position of scroll box 42 within scroll area 40 in the manner depicted within Figure 2. Additionally, mouse pointer 44 may be utilized to graphically select and move scroll box 42 in a so-called "drag and drop" operation.

As will be appreciated upon reference to the foregoing description, scroll bar 34 is a multistate graphic object which, may vary in status in that various positions may be attained by scroll box 42. In accordance with the method and system of the present invention, the status of scroll bar 34 may be nonvisually determined by associating a particular audible cue having at least one audible characteristic with scroll bar 34. For example, as will be described in greater detail herein, an audible tone may be associated with scroll bar 34. Thereafter, variations in the position of scroll box 42 may be detected and utilized to alter an audible characteristic of that audio tone, by raising the audio tone in frequency or amplitude, in response to raising the position of scroll box 42 within scroll area 40. Similarly, lowering scroll box 42 to the lower area of scroll area 40 may be utilized, in accordance with the method and system of the present invention, to lower the frequency or amplitude of the audible tone associated with scroll bar 34. Alternately, a periodic signal, such as a series of "clicks" may be associated with scroll bar 34 and the period at which these "clicks" are generated may be varied in accordance with the position of scroll box 42 within scroll area 40. Thus, as scroll box 42 is manipulated to an upper area of scroll area 40, the period of these "clicks" may be decreased, causing the more rapid generation of these sounds, in a manner similar to that of a Geiger counter.

Upon review of the foregoing description those skilled in the art will appreciate that the method and system of the present invention thus permits the status of a multistate graphic object, such as scroll bar 34, to be determined in a nonvisual manner, by associating an audible cue with a multistate graphic object, such as scroll bar 34, and thereafter varying or altering a characteristic of that audible cue in response to variations in the state of the multistate graphic object. Additionally, multiple multistate graphic objects may be present within a single computer display. This situation may be simply and efficiently managed utilizing the method and system of the present invention by associating a different "voice" with each multistate graphic object within the display. For example, utilizing a well known MIDI synthesizer, a trumpet audible tone may be associated with one multistate graphic object while an oboe audible tone is associated with an alternate multistate graphic object. In this manner, the state of multiple multistate graphic objects within the data processing system may be rapidly and efficiently determined in a nonvisual manner by utilizing the method and system of the present invention.

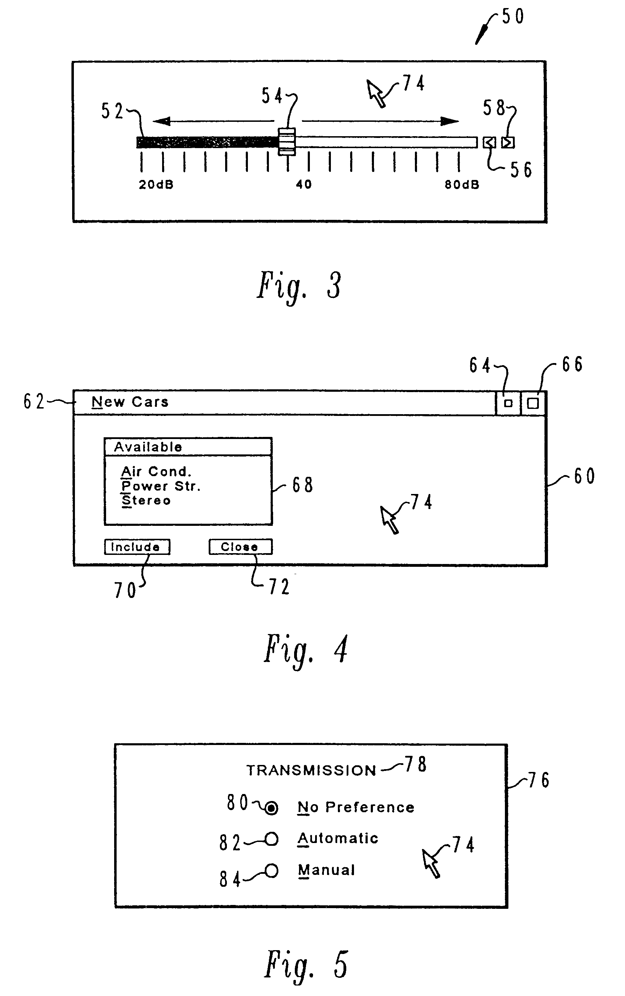

With reference now to Figure 3, there is depicted an alternate multi-state graphic object, the status of which may be determined in accordance with the method and system of the present invention. As illustrated at display area 50, a slider control is depicted. The depicted slider control includes a slider bar 52 and a slider control knob 54. Those skilled in the art will appreciate upon reference to the foregoing that the position of slider control knob 54 may be manually altered utilizing mouse pointer 74 in a so-called "drag and drop" operation, or by selecting slider arrow 56 or slider arrow 58. In either situation, the position of slider control knob 54 may be nonvisually determined at any point along the slider control utilizing the method and system of the present invention. As described above, an particular audible cue may be associated with the slider control of Figure 3 and thereafter the position of slider control knob 54 may be periodically monitored and utilized to vary an audible characteristic of the audible cue associated with the slider control. As described above, the variation of the audible cue may be accomplished by varying the frequency, amplitude or periodicity of the audible cue which is associated with this control.

Referring now to Figure 4, there is depicted a pictorial representation of a computer display window 60 which includes yet another multistate graphic object, the status of which may be nonvisually determined in accordance with the method and system of the present invention. As illustrated within display window 60, a title bar 62 is provided, indicating the content of display window 60. As above, control icons 64 and 66 are also provided and may be utilized to vary the size of display window 60, in a manner well known to those having ordinary skill in the art. A smaller display window 68 is also depicted within display window 60 and associated therewith are push buttons 70 and 72. Those skilled in the art will appreciate that push buttons of the type depicted herein may be "selected" or "deselected" in a graphical manner, utilizing, for example, mouse pointer 74.

The "selection"or "deselect ion" status of a particular push button within display window 60 may also be nonvisually determined by utilizing the method and system of the present invention. A particular audible cue is associated with either push button 70 or push button 72 and an audible characteristic associated with that audible cue is thereafter varied in response to the "selection" of "deselection" of an associated push button. In this manner, the "state" of a particular push button may be rapidly and efficiently determined in a nonvisual manner utilizing the method and system of the present invention.

With reference now to Figure 5, there is depicted yet another multistate graphic object, the status of which may be nonvisually determined in accordance with the method and system of the present invention. As depicted within display area 76, a title 78 is illustrated. Beneath title 78 are multiple so-called "radio" buttons, including, radio button 80, radio button 82, and radio button 84. In a manner which should be known to those having ordinary skill in this art, a computer user may, utilizing a graphical pointer such as mouse pointer 74, select or deselect a particular one of radio buttons 80, 82 and 84. As described above, the status of a particular radio button may be nonvisually determined by associating a particular audible cue with a selected radio button and thereafter altering an audible characteristic of that audible cue in response to a change in status of the radio push button. This may be accomplished by sequentially generating associated audible cues or by diminishing the amplitude of all deselected radio button available cues to a point where audible confusion does not occur.

Upon reference to the foregoing those skilled in the art will appreciate that the method and system described herein may therefore be utilized to nonvisually determine the status of any multistate graphic object within a data processing system by associating a particular audible cue with the multistate graphic object and thereafter altering an audible characteristic of that audible queue in response to variations in the status of the multistate graphic object, in the manner described above.

Finally, referring to Figure 6, there is illustrated a high level logic flowchart which depicts a process for implementing the method and system of the present invention. As illustrated, the process begins at block 100 and thereafter passes to block 102. Block 102 illustrates the selection of a multistate object for association with an audible cue, in accordance with the method and system of the present invention. In the event a particular multistate graphic object has not been selected the process merely iterates until such time as a particular multistate graphic object is selected for association with an audible cue, in accordance with the method and system of the present invention.

After selecting a particular multistate object for association with an audible cue, the process passes to block 104. Block 104 illustrates the association of an audible cue having at least one selected audible characteristic with the selected multistate object. Thereafter, the process passes to block 106. Block 106 illustrates the generation of the audible cue within the data processing system. Those skilled in the art will appreciate that this audible cue may be constantly generated within the data processing system or may be periodically generated, thereby indicating the presence of the selected multistate graphic object in a nonvisual manner.

Next, the process passes to block 108. Block 108 illustrates a determination of whether or not the user has deselected the multistate graphic object. That is, the user no longer desires to receive an audible cue with respect to the status of a particular multistate graphic object. If so, the process passes to block 110. Block 110 illustrates the termination of the audible cue and the process then returns, in an iterative fashion, to block 102 to await a subsequent selection of a multistate graphic object by the user. Still referring to block 108, in the event the user has not deselected the multistate graphic object the process passes to block 112. Block 112 illustrates the monitoring of the status of the selected multistate object within the data processing system. Thereafter, the process passes to block 114. Block 114 illustrates a determination of whether or not the status of the selected multistate graphic object has changed. If not, the process merely returns to block 108, in an iterative fashion, to await a deselection of the object or a change in the status of the multistate graphic object. However, in the event the status of the selected multistate graphic object has changed, the process passes to block 116. Block 116 illustrates the alteration of the audible cue, by varying an audible characteristic of that cue, in the manner described above. As set forth above, this alteration may comprise, for example, a variation in the frequency, amplitude or periodicity of the audible cue, in any manner well known in the art. Thereafter, the process passes to block 118 which illustrates the generation of the altered audible cue, permitting the altered status of a multistate graphic object to be determined in a nonvisual manner. Next, the process returns to block 108 in an iterative fashion to continue to await a deselection of the object or to monitor the status of the selected multistate graphic object if no deselection occurs, in the manner described above.

Upon reference to the foregoing those skilled in the art will appreciate that the method and system of the present invention permits a visually occupied or visually impaired user to determine the status of a multistate graphic object within a data processing system by providing an audible cue associated with each multistate graphic object and thereafter varying an audible characteristic of that cue, in response to changes in the status of the multistate graphic object.

While the invention has been particularly shown and described with reference to a preferred embodiment, it will be understood by those skilled in the art that various changes in form and detail may be made therein without departing from the spirit and scope of the invention.

## Claims

1. A method in a data processing system for nonvisual determination of the status of a multistate graphic object displayed within said data processing system, said method comprising the steps of:
associating a particular audible cue having at least one audible characteristic with a selected multistate graphic object;
generating said particular audible cue within said data processing system;
periodically determining a status of said selected multistate graphic object; and
altering said audible characteristic of said particular audible cue in response to variations of said status of said selected multistate graphic object.

2. The method in a data processing system for nonvisual determination of the status of a multistate graphic object according to Claim 1, wherein said step of associating a particular audible cue having at least one audible characteristic with a selected multistate graphic object comprises the step of associating a particular audible cue having a selected frequency with said selected multistate graphic object.

3. The method in a data processing system for nonvisual determination of the status of a multistate graphic object according to Claim 2, wherein said step of altering said audible characteristic of said particular audible cue in response to variations of said status of said selected multistate graphic object comprises the step of altering said selected frequency in response to variations of said status of said selected multistate graphic object.

4. The method in a data processing system for nonvisual determination of the status of a multistate graphic object according to Claim 1, wherein said step of associating a particular audible cue having at least one audible characteristic with a selected multistate graphic object comprises the step of associating a particular audible cue having a selected amplitude with said selected multistate graphic object.

5. The method in a data processing system for nonvisual determination of the status of a multistate graphic object according to Claim 1, wherein said step of associating a particular audible cue having at least one audible characteristic with a selected multistate graphic object comprises the step of associating a particular audible cue having a selected periodic characteristic with said selected multistate graphic object.

6. The method in a data processing system for nonvisual determination of the status of a multistate graphic object according to Claim 1, wherein said multistate graphic element comprises a scroll bar having a scroll box and wherein said step of altering said audible characteristic of said particular audible cue in response to variations of said status of said multistate graphic object comprises the step of altering said audible characteristic of said particular audible cue in response to variations in position of said scroll box with respect to said scroll bar.

7. The method in a data processing system for nonvisual determination of the status of a multistate graphic object according to Claim 1, wherein said multistate graphic element comprises a push button and wherein said step of altering said audible characteristic of said particular audible cue in response to variations of said status of said multi- state graphic object comprises the step of altering said audible characteristic of said particular audible cue in response to a selection status of said push button.

8. The method in a data processing system for nonvisual determination of the status of a multistate graphic object according to Claim 1, wherein said multistate graphic object comprises a slider control having a slider bar and a slider control knob and wherein said step of altering said audible characteristic of said particular audible cue in response to variations of said status of said multi- state graphic object comprises the step of altering said audible characteristic of said particular audible cue in response to variations in position of said slider control knob.

9. A data processing system for nonvisual determination of the status of a multistate graphic object displayed within said data processing system, said data processing system comprising:
means for associating a particular audible cue having at least one audible characteristic with a selected multistate graphic object;
means for generating said particular audible cue within said data processing system;
means for periodically determining a status of said selected multistate graphic object; and
means for altering said audible characteristic of said particular audible cue in response to variations of said status of said selected multi- state graphic object.

10. The data processing system for nonvisual determination of the status of a multistate graphic object according to Claim 9, wherein said means for associating a particular audible cue having at least one audible characteristic with a selected multistate graphic object comprises means for associating a particular audible cue having a selected periodic characteristic with said selected multistate graphic object.

11. The data processing system for nonvisual determination of the status of a multistate graphic object according to Claim 10, wherein said means for altering said audible characteristic of said particular audible cue in response to variations of said status of said selected multistate graphic object comprises means for altering said selected periodic characteristic in response to variations of said status of said selected multistate graphic object.

12. The data processing system for nonvisual determination of the status of a multistate graphic object according to Claim 9, wherein said means for associating a particular audible cue having a least one audible characteristic with a selected multistate graphic object comprises means for associating a particular audible cue having a selected frequency with said selected multistate graphic object.

13. The data processing system for nonvisual determination of the status of a multistate graphic object according to Claim 9, wherein means for associating a particular audible cue having at least one audible characteristic with a selected multi- state graphic object comprises means for associating a particular audible cue having a selected amplitude with said selected multistate graphic object.

14. The data processing system for nonvisual determination of the status of a multistate graphic object according to Claim 9, wherein said multi state graphic element comprises a scroll bar having a scroll box and wherein means for altering said audible characteristic of said particular audible cue in response to variations of said status of said multistate graphic object comprises means for altering said audible characteristic of said particular audible cue in response to variations in position of said scroll box with respect to said scroll bar.

15. The data processing system for nonvisual determination of the status of a multistate graphic object according to Claim 9, wherein said multi state graphic element comprises a push button and wherein said means for altering said audible characteristic of said particular audible cue in response to variations of said status of said multi- state graphic object comprises means for altering said audible characteristic of said particular audible cue in response to a selection status of said push button.

16. The data processing system for nonvisual determination of the status of a multistate graphic object according to Claim 9, wherein said multi state graphic object comprises a slider control having a slider bar and a slider control knob and wherein said means for altering said audible characteristic of said particular audible cue in response to variations of said status of said multistate graphic object comprises means for altering said audible characteristic of said particular audible cue in response to variations in position of said slidercon- trol knob.
